Europäisches Patentamt

European Patent Office

Office européen des brevets

(11) Veröffentlichungsnummer: **0 516 052 A1**

# EUROPÄISCHE PATENTANMELDUNG

(21) Anmeldenummer: **92108856.3**

(51) Int. Cl.⁵: **B60S 1/08**

(22) Anmeldetag: **26.05.92**

(30) Priorität: **29.05.91 BR 9102295**

(43) Veröffentlichungstag der Anmeldung:
**02.12.92 Patentblatt 92/49**

(84) Benannte Vertragsstaaten:
**DE FR IT SE**

(71) Anmelder: **ROBERT BOSCH GMBH**
**Postfach 30 02 20**
**W-7000 Stuttgart 30(DE)**

(72) Erfinder: **Luiz de Rizzo, Hélio**
**Rua Manoelito Ornellas 130**
**Sao Paulo(BR)**
Erfinder: **Sanchez Perez, Alberto**
**Rua José Maria Coelho 30**
**Freguesia do o Sao Paulo(BR)**

(54) **Scheibenwischer-Synchronisierungs-Vorrichtung.**

(57) Die Erfindung betrifft eine Scheibenwischer-Synchronisierungs-Vorrichtung mit zwei getrennten Pendelmotoren (M1 und M2) zum Antrieb jeweils eines Wischblattes. Die Motoren sind mit automatischen Stillstandskreisen (21 und 22) versehen, welche einen automatischen Kontaktschalter (31 bzw. 32) haben, der den Stillstandskreis öffnet, wenn das Wischerblatt eine vorgegebene Parkstellung erreicht. Jeder Stillstandskreis wird jeweils mit Masse verbunden, wenn der automatische Stillstandsschalter (31 und 32) die Kreisöffnungsposition erreicht. Zwischen den zwei Stillstandskreisen (21 und 22) sind Sensoren (R1 und R2) vorgesehen, um einen Steuerimpuls zu erzeugen, wenn diese einen Stromfluß in eine bestimmte Richtung feststellen. Durch den Steuerimpuls wird ein entsprechender Synchronisationsschalter (S1 und S2) gesteuert, der einen Kurzschluß im Anker des entsprechenden Pendelmotors erzeugt und den Pendelmotor im Stillstand hält, solange der Stromfluß andauert.

Die vorliegende Erfindung bezieht sich auf eine Scheibenwischer-Synchronisierungs-Vorrichtung und insbesondere auf eine Vorrichtung zur Funktionssynchronisierung unter zwei Scheibenwischern, welche jeweils von einem unabhängigen Motor und Getriebe angetrieben werden. Jeder Scheibenwischer verfügt über ein Wischerblatt. Bei den derzeitigen Fahrzeugen mit zwei unabhängigen Scheibenwischern für jeweils ein Wischerblatt, besteht keine Synchronisierung der Winkelbewegungen der Wischerblätter aus verschiedenen Gründen, wie unterschiedliche Drehzahlen der Antriebseinheiten oder die Reibung der beweglichen Teile. Der unsynchronisierte Betrieb der Scheibenwischerblätter wirkt störend auf die Augen und kann den Fahrer ablenken. Das Betriebssynchronisierungsproblem der Wischerblätter von zwei unabhängigen Scheibenwischern kann mittels komplizierter und aufwendiger elektronischer Vorrichtungen gelöst werden, welche permanent auf die Antriebseinheiten wirken und so die Blätterbewegungen synchron halten.

Eine andere bekannte Lösung für die Synchronisierung besteht aus zwei Scheibenwischern, die durch schwere, geräuscherzeugende mechanische Mittel verbunden werden. Dieses System findet vorwiegend bei Großfahrzeugen Verwendung, wobei meistens eine größere und leistungsstärkere Antriebseinheit benötigt wird.

Der Erfindung liegt die Aufgabe zugrunde, eine billige und einfache Synchronisierungsvorrichtung für zwei Scheibenwischer, von jeweils einem unabhängigen Motor angetrieben, zu gestalten.

Die obengenannten Synchronisierungsvorrichtung ist bei Scheibenwischern folgender Bauart zu verwenden:

- zwei Motoren mit gemeinsamer Gleichstrom-Energieversorgung vom Fahrzeug, wobei jeder dieser Motoren jeweils ein Wischerblatt anzutreiben hat,
- ein Versorgungskreis für beide Motoren, zum Anschluß an die gemeinsame Versorgung,
- zwei automatische Stillstandskreise, jeweils für die erste bzw. zweite Motor-Getriebegruppe, wobei jeder Stillstandskreis unabhängig an die gemeinsame Versorgung angeschlossen ist, wenn der Versorgungskreis von der entsprechenden gemeinsamen Versorgung abgeschaltet wird und umgekehrt. Jeder Stillstandskreis versorgt den jeweiligen Pendelmotor, während der Versorgungskreis stromfrei ist und das jeweilige Wischerblatt sich außerhalb eines vorgegebenen Drehwinkels befindet,
- zwei Stillstandsschalter, die funktionell an den jeweiligen Pendelmotor und elektrisch an die gemeinsame Versorgung angeschlossen sind, ebenso wie an den ersten und zweiten Stillstandskreis, so daß er auf deren Öffnungspositionen schaltet, sobald das entsprechende Wischerblatt den automatischen Parkwinkel erreicht.

Gemäß vorliegender Erfindung besteht die Synchronisierungsvorrichtung aus einer Anordnung gemäß Anspruch 1. Hierbei ist ein Leiter mit der Masse der beiden Stillstandskreise verbunden, sobald der entsprechende automatische Stillstandsschalter die Kreisöffnungsposition erreicht hat. Zwei Sensoren für Spannungsunterschiede verbinden elektrisch beide Stillstandskreise, so daß ein Steuerimpuls erzeugt wird, wenn ein Stromfluß vom zweiten zum ersten Stillstandskreis erkannt wird. Der Steuerimpuls hält an, solange der genannte Stromfluß zwischen beiden Stillstandskreisen besteht. Die Anordnung besitzt zwei Synchronisationsschalter, die jeweils mit dem Versorgungskreis der beiden Pendelmotoren und den Sensoren für Spannungsunterschiede verbunden sind, so daß bei jedem Steuerimpuls, den der Sensor an den Synchronisationsschalter weitergibt, der jeweilige Motoranker kurzgeschlossen wird. Bezüglich der obengenannten schaltungsmäßigen Auslegung gilt: immer wenn die Wischerblätter beider Scheibenwischer die Parkstellung erreichen, erzeugen die jeweiligen Stillstandsschalter den Masseschluß und bewirken die Stromabschaltung der Stillstandskreise, während, wenn die genannten Wischerblätter außerhalb des automatischen Parkwinkels stehen, die jeweiligen Stillstandsschalter weiter alle Kreise an die gemeinsame Stromversorgung angeschlossen halten. Unter diesen Umständen entsteht kein Stromunterschied zwischen beiden Stillstandskreisen und demzufolge auch kein Stromfluß durch einen der beiden Sensoren. Unter den oben beschriebenen Umständen arbeiten die Scheibenwischer mit ausreichendem Gleichlauf, so daß die Wischerblätter gleichzeitig den Parkwinkel erreichen und wieder verlassen, ohne die Mitwirkung einer weitergehenden aufwendigeren Synchronsierungsvorrichtung.

Wenn sich jedoch einer der beiden Scheibenwischer schneller bewegt als der andere und damit der entsprechende Stillstandsschalter die Masseschluß- und Kreisöffnungsposition erreicht (wenn das Wischerblatt in der Parkstellung ist), bevor dieser Zustand vom Stillstandsschalter des anderen Stillstandskreises erreicht wird, dann tritt ein Spannungsunterschied zwischen beiden Stillstandskreisen auf, so daß ein Stromfluß vom noch nicht geöffneten, noch nicht kurzgeschlossenen und noch mit Energie versorgten Stillstandskreis zu dem, der bereits geöffnet ist und auf Masse liegt, entsteht. Dieser Stromfluß wird von einem der Sensoren erfaßt, der dann einen Steuerimpuls zu dem Synchronisierungsschalter des schnelleren, voranlaufenden Pendelmotors schickt, wobei der Anker kurzgeschlossen und der Betrieb unterbrochen wird, bis der nachlaufende Pendelmotor die gleiche Position erreicht hat und sein Stillstandskreis an Masse angeschlossen wird. Nunmehr ist der Spannungsunterschied zwischen den beiden Stillstandskreisen ausgeglichen und der Sensor setzt den Stillstandsschalter außer Betrieb. Der bis dahin gebremste Pendelmotor wird wieder an Masse angeschlossen und gemeinsam mit dem anderen Pendelmotor, durch das Umschalten des jeweiligen Synchronisierungsschalters von Motorankerkurzschluß auf Masseschluß, in Betrieb gesetzt.

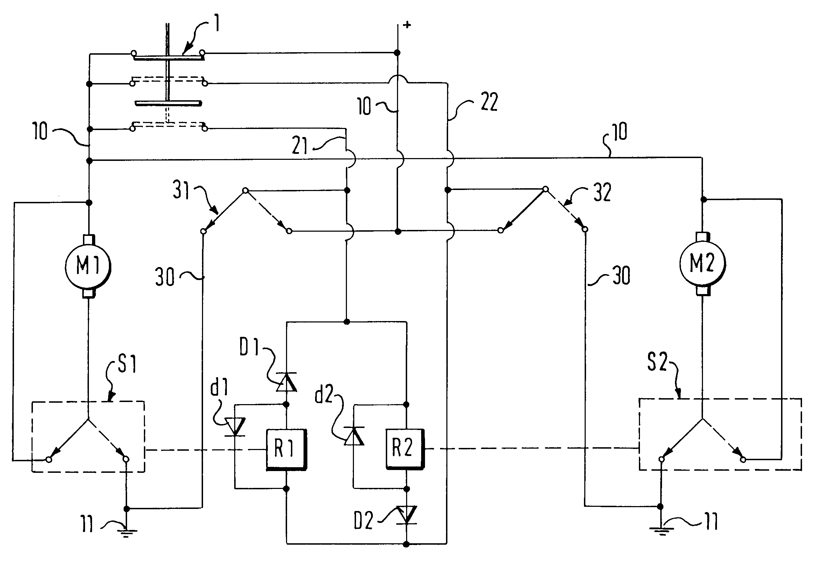

Die vorliegende Erfindung wird anschließend, mit Bezug auf die beigefügte Zeichnung (schematische Skizze einer Synchronisierungsvorrichtung für zwei Scheibenwischer, welche jeweils von einem Pendelmotor angetrieben werden) beschrieben.

Wie die Zeichnung zeigt, ist die Schaltungsvorrichtung anwendbar für ein Paar Scheibenwischer mit einem Paar Pendelmotoren M1 und M2, die an die Gleichstromquelle (+) des Fahrzeuges angeschlossen sind, wobei jeder Pendelmotor ein nicht dargestelltes Wischerblatt antreibt. Beide Pendelmotoren M1 und M2 werden vom gleichen Einspeisekreis 10, durch einen Unterbrecher I gesteuert, der vom Fahrer zum Ein- und Ausschalten der Scheibenwischeranlage benutzt wird, gemäß den Vollinien im Stromlaufplan versorgt und können in einer vorgegebenen, beliebigen Drehzahl arbeiten, kontinuierlich oder im Intervallbetrieb. Jeder Pendelmotor M1 und M2 ist mit seinem Anker mittels einer entsprechenden Masseverbindung 11 einzeln an die Masse anschließbar. In der Stellung entsprechend den gestrichelten Linien in der Zeichnung, befindet sich der Unterbrecher I in Nullstellung für die beiden Pendelmotoren M1 und M2, wobei die Stillstandskreise 21 und 22 mit Strom versorgt werden, so daß die Gleichstromquelle mit beiden Pendelmotoren durch die jeweiligen Stillstandsschalter 31 und 31 verbunden ist, von denen jeder so ausgelegt ist, daß eine Verbindung Gleichstromquelle-Pendelmotor erfolgt, wann immer die zugehörigen Wischerblätter sich bei ihren wechselnden Winkelbewegungen außerhalb bestimmter automatischer Stillstandslagen befinden. Dabei muß hier gesagt werden, daß die automatischen Stillstandsschalter 31 und 32 konstruktiv beliebig ausgelegt werden können, solange es möglich ist, die Scheibenwischer auch nach dem Betätigen des Unterbrechers I in Betrieb zu halten, bis die Wischerblätter die Stillstandslage erreicht haben, in der dann die Stillstandsschalter die Stillstandskreise 21 und 22 öffnen und von der Energieversorugng abtrennen.

Gemäß der vorliegenden Erfindung sind beide Stillstandsschalter 31 und 32 mit dem Leiter 30 verbunden, der so ausgelegt ist, daß die Stillstandskreise 21 und 22 dann an Masse gekoppelt werden, wenn die jeweiligen Stillstandsschalter 31 und 32 sich in der Öffnungsstellung des jeweiligen Stillstandskreises befinden, d.h. in der Stellung, die der automatischen Stillstandsstellung der Wischerblätter entspricht.

Außerdem sind, wie aus der Zeichung abzulesen ist, beide Stillstandskreise elektrisch durch zwei Sensoren R1 und R2 verbunden. Diese Sensoren sind so ausgelegt und angeordnet, daß jeder Stromfluß von einem Stillstandskreis zum anderen bemerkt und ein Stromfluß in die andere Richtung verhindert wird.

In der Zeichnung besteht jeder Sensor aus einem elektromechanischen Relais R1 bzw. R2, in Verbindung mit jeweils einer Polarisationsdiode D1 und D2, zur Bestimmung der Stromflußrichtung, die vom entsprechenden Relais erfaßt werden soll. Jedes Relais R1 und R2 verfügt in Parallelschaltung über eine Diode d1 bzw. d2, zur Aufnahme der Spannungsspitzen, die beim Abschalten des Relais entstehen. Jeder Pendelmotor M1 und M2 ist mit der Masseleitung 11 durch die Synchronisationsschalter S1 und S2 verbunden, welche zwischen dem Masseanschluß (in der Zeichnung nur für S2 gezeichnet) und einer Kurzschlußstellung des jeweiligen Ankers umschalten, wie dies für den ersten Synchronisationsschalter S1 dargestellt ist. Die Synchronisationsschalter S1 und S2 werden von dem zuständigen Relais R1 oder R2 betätigt, aufgrund eines bestehenden Stromunterscheides zwischen beiden Stillstandskreisen 21 und 22.

Derjenige Stillstandsschalter 31 oder 32, welcher als erster die "Masseposition" erreicht (Fall des ersten Stillstandsschalters 31), betätigt so sein betreffendes Relais (hier das Relais 1), wodurch der entsprechende Synchronisationsschalter (Synch.schalter S1) von der Masselage auf Kurzschlußlage des entsprechenden Pendelmotors (M1) umschaltet, so daß er "warten" muß, bis der Stillstandsschalter 32 des zweiten Pendelmotors (M2) auch die "Masselage" erreicht und so die Spannungtsdifferenz beim ersten Relais R1 annuliert wird und dadurch seinen Synchronisationsschalter S1 freigibt, um in die Masselage zurückzukommen und damit den Start des Pendelmotors M1 veranlaßt, der zu diesem Zeitpunkt bereits schon mit dem Pendelmotor M2 synchron läuft.

Diese Synchronisierungsvortrichtung ermöglicht durch ihre einfache Bauweise eine automatische Überprüfung und Einstellung der Synchronisierung der beiden Scheibenwischer jedesmal, wenn die Wischerblätter ihre Stillstandslage durchlaufen.

**Patentansprüche**

1. Synchronisierungsvorrichtung für Scheibenwischer, mit

- zwei Antriebsmotoren, die einzeln an eine gemeinsame Stromquelle (+) anschließbar sind, wobei jeder dieser Motoren ein Wischerblatt antreibt, gekennzeichnet durch
- einen gemeinsamen Einspeisekreis (10), der an die gemeinsame Stromquelle (+) anschließbar ist,
- einen ersten (21) und einen zweiten (22) automatischen Stillstandskreis für die jeweiligen ersten (M1) und zweiten (M2) Motoren, wobei jeder Stillstandskreis (21 und 22) unabhängig an die gemeinsame Stromquelle (+) anschließbar ist, wenn der Einspeisekreis (10) von der genannten gemeinsamen Stromquelle (+) getrennt wird und umgekehrt, wobei jeder Stillstandskreis (21 und 22) den entsprechenden Motor (M1 und M2) versorgt, während der Einspeisekreis keinen Strom führt und das entsprechende Wischerblattt sich außerhalb des automatischen Parkwinkels befindet, sowie
- einen ersten und einen zweiten automatischen Stillstandsschalter (31 und 32), welche funktionsmäßig an jeweils einen Motor (M1 und M2) und elektrisch an die gemeinsame Stromquelle (+) und an den jeweiligen ersten (21) und zweiten (22) Stillstandskreis anschließbar sind, so daß der entsprechende Stillstandskreis geöffnet wird, wenn das jeweilige Wischerblatt den automatischen Parkwinkel erreicht hat.

2. Synchronisierungsvorrichtung nach Anspruch 1, gekennzeichnet durch
- eine Leitung (11), die jeden der beiden Stillstandskreise (21 und 22) an Masse anschließt, sobald der jeweilige automatische Stillstandsschalter (31 und 32) seinen Stillstandskreis (21 und 22) öffnet,
- einen ersten (R1) und einen zweiten (R2) Sensor für Spannungsunterschiede, welche elektrisch an den beiden Stillstandskreisen (21 und 22) anliegen, so daß ein Steuerimpuls erzeugt wird, wenn jeweils ein Stromfluß vom zweiten (22) zum ersten (21) Stillstandskreis erkannt wird und auch wenn der Stromfluß vom ersten und zweiten Stillstandskreis fließt und dabei der genannte Steuerimpuls während der Unterbrechung des jeweiligen Stromflusses erzeugt wird.

3. Synchronisierungsvorrichtung nach Anspruch 1 oder 2, gekennzeichnet durch

- einen ersten (S1) und einen zweiten (S2) Synchronisationsschalter, welche funktionsmäßig an die jeweiligen Einspeisekreise (10) der Pendelmotoren (M1 und M2) sowie an einen ersten (R1) und zweiten (R2) Sensor angeschlossen sind, wobei jeder Synchronisierungsschalter (S1 und S2) einen Kurzschluß beim Anker des jeweiligen Pendelmotors (M1 und M2) erzeugt, wenn der entsprechende Sensor (R1 und R2) einen Steuerimpuls zu seinem Synchronisierungsschalter (S1 und S2) leitet.

4. Synchronisierungsvorrichtung nach einem der vorhergehenden Ansprüche, dadurch gekennzeichnet, daß jeder Sensor für Spannungsunterschiede ein elektromechanisches Relais (R1 und R2) aufweist und in Reihe an eine jeweilige Polarisationsdiode (D1 und D2) angeschlossen ist, welche bestimmt, auf welche Stromflußrichtung das entsprechende Relais reagieren soll.

5. Synchronisierungsvorichtung nach Anspruch 4, dadurch gekennzeichnet, daß zu jedem Relais (R1 und R2) parallel eine Filterdiode angeschlossen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-1 573 900 (LUCAS INDUSTRIES LIMITED)<br>* Seite 2, linke Spalte, Zeile 32 - Seite 3, rechte Spalte, Zeile 100 *<br>* Seite 4, rechte Spalte, Zeile 69 - Zeile 82 *<br>* Abbildungen 1-6 * | 1,3 | B60S1/08 |
| A | | 2,4 | |
| | --- | | |
| X | FR-A-2 290 330 (GENERAL MOTORS LIMITED)<br>* Seite 5, Zeile 3 - Seite 7, Zeile 39; Abbildungen * | 1 | |
| A | | 2,3 | |
| | ----- | | |

RECHERCHIERTE
SACHGEBIETE (Int. Cl.5 )

B60S

Der vorliegende Recherchenbericht wurde für alle Patentansprüche erstellt

| Recherchenort | Abschlußdatum der Recherche | Prüfer |
|---|---|---|
| DEN HAAG | 03 SEPTEMBER 1992 | KULOZIK E.G. |